# EUROPEAN PATENT APPLICATION

(11) **EP 2 693 788 A1**
(43) Date of publication of application: **05.02.2014**
(21) Application number: 12305949.5
(22) Date of filing: 01.08.2012
(51) Int. Cl.: H04W 12/06, H04L 9/32, G06Q 20/40, B60R 13/10, H04W 12/10, G06K 17/00

(54) **A method for communicating data and corresponding system**

(71) Applicant: Gemalto SA, 92190 Meudon (FR)
(72) Inventor: Tripotin, Guennolé, 13705 La Ciotat (FR); Banchelin, Xavier, 13705 La Ciotat (FR); Plessis, Patrice, 13705 La Ciotat (FR)

(57) **Abstract**

The invention relates to a method 20 for communicating data.

According to the invention, a first device 12 stores first data and at least one first key. A second device 14 stores second data. The method comprises the following steps. The second device sends to the first device the second data 24. The first device concatenates the first data to the second data and generates a concatenated result. The first device signs, by using the first key, the concatenated result and generates a signed concatenated result. The first device sends to the second device the signed concatenated result 26.

The invention also relates to a corresponding system.

## Description

### Field of the invention:

The invention relates generally to a method for communicating data.

Furthermore, the invention also pertains to a system for communicating data. The system comprises a first device and at least a second device.

The present invention is notably applicable to a vehicle domain wherein a vehicle is to be rent out from an owner of a vehicle to one or several persons, as driver(s).

### State of the art:

As known per se, a vehicle owner also owns a vehicle registration document that allows identifying the vehicle and its owner.

However, the vehicle owner may rent out her/his vehicle to another person(s), as driver(s), while giving to each driver, during such a vehicle renting, either her/his original vehicle registration document or a paper copy of the vehicle registration document.

There is a need to provide with a solution that allows the vehicle owner to rent out her/his vehicle while keeping her/his vehicle registration document.

### Summary of the invention:

The invention proposes a solution for satisfying the just herein above specified need by providing with a method for communicating data.

According to the invention, a first device storing first data and at least one first key, a second device storing second data, the method comprises the following steps: The second device sends to the first device the second data. The first device concatenates the first data to the second data and generates a concatenated result. The first device signs, by using the first key, the concatenated result and generates a signed concatenated result. The first device sends to the second device the signed concatenated result.

The principle of the invention consists in that a first device collects from a second device information, joins its own first information and the collected second information end to end, signs aggregated (or concatenated) data and transmits back resulting signed aggregated data.

Such a data exchange between the two devices enables their respective owner to keep her/his own device that records preferably data relating to the owner.

The transmission of the signed data originating from the first device allows identifying and authenticating the first device as data sender.

The invention solution allows each of the two devices to give access to or access data originating from the other device while being able to authenticate a sender of the data originating from the first device.

Due to a loading of data relating to the first device that authenticates a data source, there is no need to give the first device that registers information to be read to a person which owns the second device.

It is to be noted that the invention does not impose any constraint with respect to a data communication technology type that is used for transmitting the data from one device to the other.

The type of the data communication may encompass a contact data communication technology, a contact-less data communication technology or any combination thereof.

According to a further aspect, the invention is a system for communicating data.

According to the invention, the system comprises a first device and at least one second device, the first device comprising means for storing first data and at least one first key, a second device comprising means for storing second data. The second device comprises means for sending to the first device the second data. The first device comprises concatenation means for concatenating the first data to the second data, the concatenation means generating a concatenated result. The first device comprises signature means for signing, by using the first key, the concatenated result, the signature means generating a signed concatenated result. The first device comprises means for sending to the second device the signed concatenated result.

The first device may be a terminal or a token.

The second device may also be a terminal or a token.

The invention does not impose any constraint as to a kind of the token.

As removable token, it may be a smart card or a smart dongle of the USB (acronym for "Universal Serial Bus") type.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates a simplified diagram of one embodiment of a system for communicating data by using a smart card and two mobile (tele)phones, so as to provision a first phone with data relating to an owner of the card while authenticating a source of the card data, according to the invention;
- Figure 2 represents an example of one message flow between the card and the first phone of figure 1, so that, when renting out a vehicle to an owner of the first phone, the card provides notably the first phone with signed data relating to the card owner, the first phone owner and the vehicle belonging to the card user; and
- Figure 3 illustrates an example of one message flow between the first phone and a second phone, as controller, of the figure 1, so that the controller reads, among others, a signature originating from the first phone, as an intermediary entity that relays the signature issued by the card.

### Detailed description:

Herein under is considered a case in which the invention method for communicating data is implemented by a smart card, as token and first device, and a mobile phone, as user terminal and second device.

Within the present description, a token is a smart object that is intended to communicate with the outside world. The token may be constituted by any electronic medium.

According to another embodiment (not represented), the invention method for communicating data is implemented by two tokens, as first and second device. The second device is a standalone entity. In other words, the second device does not cooperate with any user terminal so as to store, besides information relating to the first token, a signature related to the first token. According to such an embodiment, the second device is adapted to carry out the functions that are carried out by the mobile phone and that are described infra.

Naturally, the herein below described embodiment is only for exemplifying purposes and is not considered to reduce the scope of the invention.

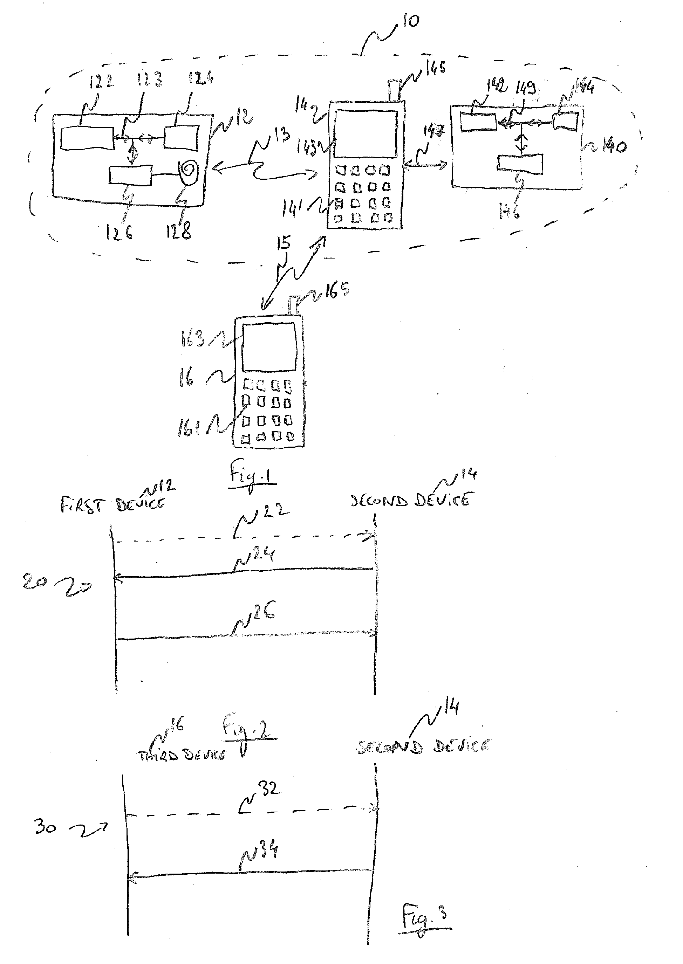

**Figure 1** shows schematically a system 10 for communicating data.

Such a system includes a smart card 12, as first device and first token, a first mobile phone 14, as second device, and a second mobile phone 16, as third device coupled to the first mobile phone 14.

For sake of simplicity, the smart card 12, the first mobile phone 14 and the second mobile phone 16 are termed herein after the card 12, the first phone 14 and the second phone 16 respectively.

The card 12 belongs to one (or several) user(s).

The card 12 is specific to the considered user(s).

The card 12 is used as electronic Vehicle Registration (or eVR) type device.

The eVR type device registers data, as eVR data, relating to one (or several) vehicle(s) and data relating to each user that owns the concerned vehicle. The eVR data is stored preferably within a dedicated file, as eVR file.

The card 12 user, as (vehicle) renter, owns the considered vehicle which she/he rends out to a phone user, as (vehicle) borrower, preferably in a temporary manner, i.e. for a limited time period.

The card 12 includes a chip (not represented).

The card chip includes at least one microprocessor 122, as data processing means, at least one memory 124, as data storing means, and at least one Input/Output (or I/O) interface 126 that are internally all connected, through an internal bidirectional data bus 123, to each other.

The card I/O interface 126 allows communicating data from the internal chip components to the chip exterior and conversely.

The card I/O interface 126 is linked preferably to an antenna 128 that is carried by the card 12.

The card I/O interface 126 includes, for instance, contact-less communication means.

Within the present description, the adjective "contact-less" used within the expression "contact-less communication means" denotes notably that the communication means communicates via one or several short range RadioFrequency (or RF) links by using, for example, International Organization for Standardization/ International Electrotechnical Commission (or ISO/IEC) 14 443 specifications or the like.

The short range RF may be more or less short.

The short range RF may be fixed, for example, at 13.56 MHz relating to a Near Field Communication (or NFC) type technology.

The short range RF may be fixed, for example, from around 2,4 GHz to around 10 GHz (for Ultra Wide Band (or UWB) e.g. IEEE 802.15.4a), at 2,4-2,5 GHz with a range of about 10 m to 100 m (for Zigbee (e.g. IEEE 802.15.4), Wifi and Bluetooth or Bluetooth low energy (e.g. IEEE 802.15.1)) and/or other frequency value(s) allowing to communicate data at a short range (typically from about 20 cm to 800 m).

The card microprocessor 122 processes, controls and communicates internally data with all the other components incorporated within the chip and, through the I/O interface(s) 126, with the chip exterior.

The card microprocessor 122 executes or runs one or several applications.

The card memory 124 stores executable data and non-executable data.

When not further specified, the data stored within the card memory 124 is non-executable data.

As executable data, the card memory 124 stores an Operating System (or OS) and at least one application.

As application, the card memory stores an application for electronically Delegating a Vehicle Registration, as eDVR application.

The card memory 124 stores, preferentially in a secure manner, data relating to one or several users who are authorized to access the card memory 124.

The user data and other data needed by the eDVR application that is loaded for personalizing the card 12 after its issuance may be stored within a so-termed electronic Vehicle Registration (or eVR) file, in which data input or supplied when the card microprocessor 122 executes the eDVR application is recorded.

The card memory 124 may dedicate a so-termed electronic Delegated Vehicle Registration (or eDVR) file, in which data, as eDVR data, output or issued when the card microprocessor 122 executes the eDVR application is recorded.

As data relating to one or several users, it includes, for each first device user, one User Identifier (or UID) and one or several keys.

As UID, it contains, for each user, a unique number associated with the card 12 user and/or a first and last names of the card 12 user, as vehicle owner.

As UID, it may also contain, for each user, other data relating to the card 12 user, as vehicle owner, like one or several picture(s) of the card user, a date of birth of the card user, one or several mail address(es) of the card user, one or several phone number(s) of the card user, one or several email address(es) of the card user.

Such a first device user data item list is not exhaustive but only for exemplifying purposes.

As key(s), it includes preferably at least one private key. The private key is associated with a corresponding public key.

The card memory 124 stores, preferentially in a secure manner, data relating one or several cryptographic algorithm(s).

As data relating one or several cryptographic algorithm(s), it may comprise a Digital Signature Algorithm (or DSA), an Elliptic Curve Digital Signature Algorithm (or ECDSA) that uses elliptic curve cryptography, as signature algorithm(s) that is(are) securely stored within the card memory 124.

The private/public key pair is used for signing data and verifying the signed data respectively.

The private key is stored, in a secure manner, within the card memory 124.

The private key, as secret key, is known only to the card 12.

The private/public key pair may be either an Active Authentication (or AA) key pair or a Chip Authentication (or CA) key pair relating to a standard of the ISO/IEC 7813 type or the like.

The public key is only readable in clear (i.e. non-encrypted) data after a possible user authentication that has been successful.

The public key may be ensured as to the integrity of data sent to an external entity, like a phone or a second token as second device.

To ensure the integrity of the sent data, a process similar to a so-termed International Civil Aviation Organization (or ICAO) Passive Authentication may be used.

The public key includes preferentially a certificate signed by an authority.

The certificate allows associating the public key to an entity, so as to ensure a validity of the public key. The certificate is preferentially issued by a Certification Authority (or CA). The CA allocates to the certificate preferably a validity date, as date after which the certificate is no more valid. The CA may revoke the certificate before the validity date in particular when the public key has been compromised or stolen.

The certificate allows securing data exchange while ensuring an authentication of the card 12 as sender of data to be sent to an external device, like a user terminal or a token, as second device.

As data relating to one or several users, it may include for each user:
- one or several passwords, like a Personal Identity Number (or PIN), one or several finger prints, one or several voice prints and/or one or several iris prints, as user authentication data, that is(are) known or specific to the user and securely stored within the card memory 124;
- one or several credentials, like a user name and/or IDentifier (or ID) of the subscriber; and/or
- one or several cryptographic algorithms, as data relating to one or several secrets, that is(are) securely stored within the card memory 124.

As data relating to one or several vehicles, it includes, for each user, as vehicle owner, one or several vehicle identifiers, like a vehicle IDentification number, a vehicle category identifier, a vehicle brand and model identifier and/or other related data required by a verification authority, like a police or a state agency.

As vehicle data, it may further comprise a number of allowed seat(s) within the vehicle, a date of expiry of a vehicle technical control and/or other related data required by a verification authority, like a police or a state agency.

The card microprocessor 122 executes one or several security functions.

The security functions include at least a data signature process to be used before sending data, like the concatenated result, to outside, so as to prove an origin of data originating from the card 12. To sign data, the card 12 uses a predetermined signature algorithm, like a DSA, an ECDSA or a Rivest Shamir Adleman (or RSA) algorithm, and a predetermined signature key that are both stored within the card memory 124. The signature key is preferably related to the card 12, as private key. The interlocutor, namely the first phone 14 as second device, or another device connected to the interlocutor, like the second phone 16, may verify corresponding signed data by using a predetermined signature verification algorithm and a predetermined signature verification key that are both stored within the interlocutor memory. The signature verification key is preferably a public key relating to the card 12 that has been deduced from the card private key. The signature verification key is supplied to any entity, like a remoter server (not represented) or a second phone 16, as signature controller, prior to any signature verification.

According to an embodiment, the card 12 sends to a remote server (not represented) the signature verification key. The second phone 16 retrieves from the remote server the signature verification key relating to the card 12 by using a card 12 identifier.

Alternately, the card 12 sends directly, i.e. without any intermediary entity, to the second phone 16 the signature verification key.

The security functions include preferably an integrity control process to be used to data after its reception, so as to detect whether received data is or is not modified.

The security functions include preferably an integrity application process to be used to data before its sending, so as to allow a corresponding addressee to detect whether sent data is or is not modified.

The security functions include preferably a user authentication process to be used prior to accessing the card memory 124. To authenticate the user, the user has to enter a PIN or biometric data, as user reference data, that is securely stored within the card memory 124. As biometric data, it may include a fingerprint(s), an iris print(s) and/or a voice print(s) relating to an authorized user(s).

The security functions include preferentially an encryption/decryption process to be used before sending data to outside/after receiving data from outside, so as to protect access to data managed by or through the card 12. To encrypt data to be sent, the card 12 uses an encryption key and an encryption algorithm, such as an Advanced Encryption Standard (or AES), a Data Encryption Standard (or DES) or the like, that are stored within the card memory 124. To decrypt data to be received, the card 12 may use a decryption key and a decryption algorithm, such as an AES, a DES or the like, that are stored within the card memory 124.

The card 12 is able to retrieve or collect data originating from an external device, like a user terminal or another token.

As data to be collected, it comprises preferably data relating to another user, as driver and borrower of the concerned vehicle.

The data to be collected is described infra with respect to data stored at the first phone 14 side, as electronic Driving Licence (or eDL) data, within either a chip memory 144 or a phone memory.

The data to be collected is stored at an external entity, as second device.

According to one invention feature, the card 12 is arranged to concatenate data stored within the card memory 124 to collected data stored within an interlocutor device, as external and second device, and generate thereby a concatenated result.

Alternately, instead of a concatenation of data originating from the card 12, as first device, to data originating from the second device, the card 12 combines or associates the card 12 data with the second device data in a predetermined order. The data combination or association consist in, for example, serializing one field of the card 12 data and another field of the second device data in an alphanumeric order or in a predetermined format.

The card 12 is able to sign, by using a predetermined key that is stored within the card memory 124, the concatenated result and generate thereby a signed concatenated result.

The predetermined key is preferably a private key with which a corresponding public key is associated.

The card 12 is included within in a Public-Key Infrastructure (or PKI) which uses a digital certificate.

The card 12 is able to send to the second device the signed concatenated result.

The card 12 may be configured to send to the second device other data like a date of expiry of a copy of the signed concatenated result, as date of expiry of a rental of the concerned vehicle.

A short range RF link 13 is bi-directional, i.e. that enables to exchange data in two ways between the card 12 and an external entity, like a user terminal or another token, as second device.

The card 12 is connected, through a bi-directional contact-less link 13, i.e. a short range RF link 13, to the first phone 14, as external entity and second device.

According to another embodiment (not represented), the card 12 is connected, through a bi-directional contact link, such as an ISO 7816 or USB type link, to the first phone 14.

Instead of a phone, the second device may be any other device including means for processing data, means for storing data and comprising or being connected to communication means for exchanging data with outside.

The second device may be a user terminal.

Instead of being constituted by a phone, the user terminal may be, for instance, a desktop computer, a laptop computer, a palm-top computer, a media-player, a game console, a tablet, a netbook, a Personal Digital Assistance (or PDA), a digital audio player, a video player, a multimedia player, a camera, a handset, or a computer incorporated or embedded within a vehicle (that belongs to the first device user and is being rent out to the second device user).

The first phone 14 belongs to one (or several) user(s).

The first phone 14 is used as an electronic Driving Licence (or eDL) type device. The eDL type device registers data, as eDL data, relating to each phone user that owns a driving licence.

The first phone 14 user, as driver, borrows a vehicle owned by the card 12 user, as vehicle owner or holder.

The first phone 14 includes preferably a keyboard 141 and a display screen 143, as Man Machine Interface (or MMI).

Alternatively, instead of a display screen, the first phone 14 is equipped with a touch sensitive display screen.

The MMI allows a phone user to interact with the first phone 14.

The first phone 14 comprises a long RF antenna 145. The long RF antenna 145 allows communicating data, through a long range RF link(s) (not represented), over one or several mobile radio-communication networks, with a remote server (not represented).

The first phone 14 includes data processing means, such as one phone microprocessor (not represented), data storing means (not represented), as phone memory, and at least one I/O interface that are linked all together through a control and data bus (not represented).

The first phone 14 comprises a short RF antenna (not represented). The short RF antenna allows communicating data, through a short range RF link 13, with a local external device, as first device.

The first phone 14 is able to exchange data, over the bi-directional contact-less link 13, with an external device, like a user terminal or a first token, as first device.

According to a particular embodiment, the first phone 14 is NFC enabled.

Alternatively, instead of an NFC type link, the first phone 14 is able to exchange, over a Bluetooth, Wifi type link, or any other contact-less technology allowing to exchange over a short range RF link.

Instead of a contact-less link, the first phone 14 is connected, through a contact link, to an external, as first device.

The phone memory may comprise one or several memories, such as a flash memory(ies) and/or a hard disk drive(s).

The phone memory stores preferably a unique identifier relating to the first phone 14, like an International Mobile Equipment Identity (or IMEI).

The phone memory stores an OS and one or several applications.

The first phone 14 is preferably coupled to a second token 140.

The second token 140 is under control of the phone microprocessor.

Alternately, instead of being coupled to the second token 140, the first phone 14 stores, within its own memory, data stored within the second token 140 as described infra.

The phone I/O interface includes an I/O interface for exchanging data with the second token 140.

The phone I/O interface with the second token 140 may be an International 7816 type interface, as contact interface, when the second token 140 is inserted within the first phone 14.

Instead of a contact interface, the phone I/O interface with the second token 140 includes or be connected to a contact-less interface. The first phone 14 includes or is connected to means for communicating data while using preferably a short range RF link. The short range RF link may be related to any technology type that allows the first phone 14 to exchange data with an external proximate device, as local device.

The second token 140 includes data processing means, such as one chip microprocessor 142, data storing means, as chip memory 144, and at least one I/O interface, as chip I/O interface, 146 that are linked all together through a chip control and data bus 143. The second token may be an embedded chip, like an embedded Universal Integrated Circuit Card (or eUICC) or a Secure Element (or SE) soldered to a Printed Circuit Board (or PCB) of the first phone 14, a memory card, such as a (micro) Secure Digital (or SD) type card or a Multi-Media type Card (or MMC), or in a form of a smart card, like a Subscriber Identity Module (or SIM) type card, or in a form of a Universal Serial Bus (or USB) type dongle.

The chip memory 144 may be constituted by one or several EEPROM (acronym for "Electrically Erasable Programmable Read-Only Memory"), one or several ROM (for "Read Only Memory"), one or several Flash memories, and/or any other memories of different types, like one or several RAM (for "Random Access Memory").

According to another embodiment, instead of a dedicated chip for implementing the invention method, the first phone 14 uses its own microprocessor, memory and I/O interface(s).

The chip memory 144 may store data relating to a Uniform Resource Identifier (or URI), a Uniform Resource Locator (or URL) and/or an Internet Protocol (or IP) address of a remote entity(ies) that is(are) able to check a signature originating from the card 12, as identifier of at least one entity to be addressed for a signature verification.

The chip memory 144 (or the phone memory) stores data relating to the considered (second) token (or phone) user, as second device owner.

As second device user data, it comprises a first name and a last name of the second device user, as driver of the vehicle owned by the first device owner, an identifier of a driving licence owned by the second device user, like a driving licence number, a date of expiry of a driving licence owned by the second device user, a mail address of the second device user, a category(ies) of the vehicle allowed to be driven the second device user, a picture relating to the second device user, a date of birth of the second device user, an authority and/or country issuing the driving licence of the second device user, a date of expiry of the driving licence of the second device user, any possible restriction, like glasses, to drive a vehicle by the second device user, a Document Signer Certificate and Public key, and/or any other data required by a verification authority.

Such a second device user data item list is not exhaustive but only for exemplifying purposes.

The chip memory 144 or the phone memory may dedicate a so-termed Driving Licence (or DL) file, in which the second device user data is recorded.

The chip memory 144 stores preferably security functions.

The security functions include preferably a user authentication process to be used for accessing the chip memory 144. To authenticate the user, the chip memory 144 may store an application for verifying a PIN or biometric data. The chip memory 144 stores securely the expected PIN or biometric data to be input by the first phone 14 user. The second token 140 compares the input data with the stored PIN or biometric data and, only when the input data matches the stored PIN or biometric data, the second token 140 authorizes access to the chip memory 144.

The security functions include preferentially an encryption/decryption process. The encryption/decryption process uses an algorithm for encrypting data and an algorithm for decrypting data with at least one key shared between the first token 12 and the second token 140. The algorithms for encrypting/decrypting data are shared between the first token 12 and the second token 140. The encryption/decryption process is to be used before sending, through the first phone 14, to the first token 12, data and after receiving, through the first phone 14, from first token 12 data. The encryption/decryption process allows protecting access to the data exchanged between the first card 12 and the second token 140.

The second token 140 may be able to initiate an action(s) by itself, in order to interact directly with the outside world, in an independent manner of the first phone 14.

The first phone 14 is able to transmit to an external device, as first device, second device user data that is stored in either the chip memory 144 or a phone memory.

The first phone 14 is able to receive from an external device, as first device, and store, into either the chip memory 144 or a phone memory, data, like the signed concatenated result, a public key associated with the first device private key.

The thus received data, as electronic Delegated Vehicle Registration (or eDVR) data may be stored into a dedicated file, as eDVR file.

The first phone 14 may be configured to display the data received from the first device, in a particular form, like a 2D (acronym for two-dimensional) Barcode, a QR (for Quick Response) Code, or any other form that is readable from an external device, as third device, like the second phone 16.

Alternately, the first phone 14 is configured to send the data received from the first device, over a contact-less link, with an external device, like a user terminal or a third token, as third device.

A second phone 16, as third device and signature controller, belongs to one (or several) user(s) of an authority agency, a police or on its behalf.

The second phone 16 includes preferably a keyboard 161 and a display screen 163, as Man Machine Interface (or MMI).

The MMI allows a phone user to interact with the second phone 16.

The second phone 16 comprises a long RF antenna 165. The long RF antenna 165 allows communicating data, through a long range RF link(s) (not represented), over one or several mobile radio-communication networks, with a remote server (not represented).

The second phone 16 includes data processing means, such as one second phone microprocessor (not represented), data storing means (not represented), as second phone memory, and at least one I/O interface that are linked all together through a control and data bus (not represented).

The second phone 16 may comprise a short RF antenna (not represented). The short RF antenna allows communicating data, through a short range RF link 15, with a local external device, as second device.

The second phone 16 may be able to exchange data, over the bi-directional contact-less link 15, with an external device, like a user terminal or a second token, as second device.

According to a particular embodiment, the second phone 16 is NFC enabled.

Alternatively, instead of an NFC type link, the second phone 16 is able to exchange, over a Bluetooth, Wifi type link, or any other contact-less technology allowing to exchange over a short range RF link.

The second phone memory stores an OS and one or several applications.

As application supported by the second phone 16, there is an application for verifying a signature.

The second phone 16 may be coupled to a third token (not represented). The third token is under control of the second phone microprocessor.

Alternately, instead of being coupled to the third token, the second phone 16 stores, within its own memory, data stored within the third token as described infra.

Instead of a contact interface, the phone I/O interface with the third token includes or be connected to a contact-less interface. The second phone 16 includes or is connected to means for communicating data while using preferably a short range RF link. The short range RF link may be related to any technology type that allows the second phone 16 to exchange data with an external proximate device, as local device.

The third token includes data processing means, such as one chip microprocessor, data storing means, as chip memory, and at least one I/O interface, as chip I/O interface, that are linked all together through a chip control and data bus.

The third token may be an embedded chip, like a eUICC or a SE soldered to a PCB of the second phone 16, a memory card, such as a (micro) SD type card or a MMC, or in a form of a smart card, like a SIM type card that supports at least one SIM type application, or in a form of a USB type dongle.

The eUICC or the SIM type card supports at least one SIM type application.

The SIM type application(s) includes, among others, a SIM application for a Global Service for Mobiles (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) allow(s) the first phone 14 to authenticate to one or several mobile radio-communication networks.

The mobile radio-communication network(s) may be constituted by a Global Service for Mobiles (or GSM), a General Packet Radio Service (or GPRS), a Universal Mobile Telecommunications System (or UMTS), a UTRAN (acronym for "UMTS Terrestrial Radio Access Network"), an EDGE (acronym for "Enhanced Data Rates for GSM Evolution"), a Code Division Multiple Access (or CDMA), a WLAN (acronym for "Wide Local Area Network") and/or a Long Term Evolution (or LTE) type network(s).

Such a mobile radio-communication network list is not exhaustive but only for exemplifying purposes.

The third token memory may be constituted by one or several EEPROM, one or several ROM, one or several Flash memories, and/or any other memories of different types, like one or several RAM.

The third token memory (or the second phone memory) stores data relating to the considered authority agency or police, as third device user.

The third token memory (or the second phone memory) stores a public key associated with the card 12 private key that is used for signing data. The public key includes preferably a certificate signed by an authority.

The third token memory (or the second phone memory) stores data relating to a third token user. The third token memory (or the second phone memory) may dedicate a file, in which the third device user data is recorded.

The third token memory (or the second phone memory) stores one or several security functions.

The security functions include a signature verification process to be used for validating a signature. The third token (or the second phone 16) verifies corresponding signed data by using a predetermined signature verification algorithm and a predetermined signature verification key that are both stored within the third token memory or the second phone memory. The signature verification key is preferably a public key relating to the card 12 that is associated with the card private key. The signature verification key is supplied to any entity, like a remoter server (not represented) or a second phone 16, as signature controller, prior to any signature verification.

The security functions include preferably a user authentication process to be used for accessing the third token memory. To authenticate the user, the third token memory may store an application for verifying a PIN or biometric data. The third token memory stores securely the expected PIN or biometric data to be input by the second phone 16 user. The third token compares the input data with the stored PIN or biometric data and, only when the input data matches the stored PIN or biometric data, the third token authorizes access to the third token memory.

The security functions include preferentially an encryption/decryption process. The encryption/decryption process uses an algorithm for encrypting data and an algorithm for decrypting data with at least one key shared between the third token and the second token 140. The algorithms for encrypting/decrypting data are shared between the third token and the second token 140. The encryption/decryption process is to be used before sending to the second token 140 data and after receiving from second token 140 data. The encryption/decryption process allows protecting access to the data exchanged between the third token and the second token 140.

The third token may be able to initiate an action(s) by itself, in order to interact directly with the outside world, in an independent manner of the second phone 16.

The second phone 16 is able to transmit to an external device, as second device, data, like third device user data that is stored in either the third token memory or a second phone memory and possibly reading rights for authorizing the second phone 16 user to access the chip memory 144 or the first phone memory.

The second phone 16 is able to read or receive from an external device, like a second device or a remote server data, like the signed concatenated result, a public key associated with the first device private key and including a certificate signed by an authority. The second phone 16 stores, into either the third token memory or the second phone memory.

The second phone 16 is configured to check whether received data includes a valid signature originating from the first device. The valid signature proves that a user of the second device has received from a vehicle owner her/his consent for renting out her/his vehicle.

**Figure 2** depicts an exemplary embodiment of a message flow 20 that involves the card 12 and the first phone 14, so that the first phone 14 stores data that is issued by the card 12 as authenticated user consent for renting out a considered vehicle.

In the explained example, it is assumed that the card 12, as first device supports an eDVR application.

It is assumed that the phone display screen 143 displays a list of one or several applications offered through and/or from the first phone 14.

The first phone user selects, through the first phone 14 MMI, the eDVR application.

Optionally, the card 12 authenticates successfully the card user. To authenticate the card user, she/he submits data, like a PIN or biometric data, that is stored within the card memory 124 and deemed as an authorized user.

Once the card 12 user has been successfully authenticated when applicable, the first phone 14 user is allowed to access the card 12, and notably data issued by the eDVR application further to its execution by the card 12.

The card 12 may request the first phone user to add data, through the first phone MMI, further data, like a date of expiry of a rental of the considered vehicle or other data, that is not included within the eDL data.

Optionally, the card 12 sends to the first phone 14 (more exactly the phone microprocessor) a first message 22 including a request for loading data, like data relating to a second device user, as eDL data, stored either within the chip memory 144 or the phone memory.

Once the first phone 14 has received the data loading request, the first phone 14 fetches the requested data either within the chip memory 144 or the phone memory and possibly by requesting additional data from the first phone user.

The first phone 14 (or the second token 140) sends to the card 12 a second message 24 including the requested data including second device user data, as eDL data.

The card 12 concatenates the eDL data to the eVR data and generates a concatenated result.

The card 12 stores the yield eDVR data tracking thereby a list of one or several borrowers of the considered vehicle.

Then, the card 12 determines or computes a signature by using a predetermined key, as card private key, stored within the card memory 124.

The card 12 attaches the signature to the concatenated result and generates a signed concatenated result, as eDVR data.

Optionally, the card 12 encrypts data to be sent by using either a public key relating to the first phone 14 or a shared key stored within the card memory 124 and the chip memory 144.

The card 12 sends to the first phone 14 a third message 26 including the signed concatenated result, as eDVR data.

Optionally, the first phone 14 decrypts encrypted received data by using either a private key relating to the first phone 14 or a shared key stored within the card memory 124 and the chip memory 144.

Once decrypted when applicable, the first phone 14 writes into either the chip memory 144 or the phone memory the signed concatenated result, as eDVR data.

The first phone 14 stores or accesses a local device memory, like the second token memory 144, the signed concatenated result, as eDVR data.

The first phone 14 thus stores or accesses, besides the card 12 signature, the concatenated result. The first phone 14 allows tracking a list of one or several vehicle owners associated with their respective vehicles that have been rent out to the first phone 14 user.

The first phone 14 stores, besides data relating to the card 12 user, the second device user and the concerned vehicle, a signature that authenticates a source of the stored data.

**Figure 3** depicts an exemplary embodiment of a message flow 30 that involves the first phone 14, as second device, and the second phone 16, so that the second phone 16 authenticates that a user consent for renting out a considered vehicle originates, through the first phone 14, from the card 12.

In the explained example, it is assumed that a third token coupled to the second phone 16, as third device, a signature verification application.

It is assumed that the phone display screen 163 displays a list of one or several applications offered through and/or from the second phone 16.

The second phone user selects, through the second phone 16 MMI, the signature verification application.

Optionally, the third token authenticates successfully a second phone user, as third user. To authenticate the second phone user, she/he submits data, like a PIN or biometric data, that is stored within the third token memory and deemed as an authorized user.

Once the third token user has been successfully authenticated when applicable, the second phone 16 user is allowed to access the third token, and notably data issued by the signature verification application further to its execution by the third token.

Optionally, the third token sends, through the second phone 16, to the first phone 14 (more exactly its phone microprocessor) a first message 32 including a request for loading eDVR data that is stored either within the chip memory 144 or the phone memory.

Once the first phone 14 has received the eDVR data loading request, the first phone 14 fetches the requested eDVR data either within the chip memory 144 or the phone memory.

The first phone 14 (or the second token 140) sends to the third token a second message 34 including the requested eDVR data.

Then, the third token verifies whether the requested eDVR data includes, among others, data, as signature originating from the card 12 by using a public key or a certificate signed by an authority stored within the third token memory.

The third token extracts data that is included within the received eDVR data.

The third token compares extracted data to a signature previously stored within the third token memory.

If the extracted data does not match a signature originating from the first phone 14, as intermediary entity that relays the signature issued by the card 12, then the third token authenticates that the received data, as copy of eDVR data, is not valid since it is not issued from the card 12.

The driver of the considered vehicle may be a vehicle thief.

If the extracted data does match a signature originating from the first phone 14, as intermediary entity, then the third token authenticates that the received eDVR data includes an authenticated copy of original eDVR data that is issued from the card 12.

After a rental of the vehicle or after a control, the card 12 or the third token may request to the first phone 14 to erase the signature. The first phone 12 erases the stored signed concatenated result.

The invention solution allows the card 12 user to keep her/his card 12, as first device, while renting out her/his vehicle.

The invention solution allows being able to prove the card 12 user's consent for renting out her/his vehicle when a signature controller verifies that the signature originates, through a second device, from the card 12, as signature source.

The invention solution is secure since the data stored within the second device includes a signature of the card 12, as data sender.

The embodiment that has just been described is not intended to limit the scope of the concerned invention. Other embodiments may be given. As another embodiment example, instead of exchanging with a local device, the card 12 exchanges data, through a user terminal, over a wireless RF link, with a remote entity, like a remote server, as second device.

## Claims

1. A method (20) for communicating data,
**characterized in that,** a first device (12) storing first data and at least one first key, a second device (14) storing second data, the method comprises the following steps:
- the second device sends to the first device the second data (24) ;
- the first device concatenates the first data to the second data and generates a concatenated result;
- the first device signs, by using the first key, the concatenated result and generates a signed concatenated result;
- the first device sends to the second device the signed concatenated result (26).

2. Method according to claim 1, wherein the second device stores the signed concatenated result.

3. Method according to claim 1 or 2, wherein the first key includes a private key.

4. Method according to claim 3, wherein, a public key being associated with the private key, the public key includes a certificate signed by an authority.

5. Method according to claim 4, wherein, a third device (16) storing or accessing the certificate, the third device reads data from the second device, the third device verifies whether read data does or does not match a signature originating from the first device, and if read data does match a signature originating from the second device, then the third device authenticates that the signature originates from the first device.

6. Method according to claim 4 or 5, wherein, the third device storing the public key, the method further comprises the following steps:
- the third device sends to the second device a request for data;
- the second device sends to the third device data (34), as response to the request;
- the third device verifies, by using the public key, whether received data does match a signature;
- if the received data does match the signature, then the third device authenticates that the signature originates from the first device.

7. Method according to claim 6, wherein the method further comprises a signature erasure step in which the second device erases the signed concatenated result.

8. Method according to any of claims 1 to 7, wherein the first data includes at least one element of a group comprising:
- a name of the first device owner;
- an identifier of a vehicle owned by the first device owner;
- a mail address of the first device owner;
- a date of an expiry of a vehicle technical control; and
wherein the second data includes at least element of a group comprising:
- a name of the second device owner, as driver of the vehicle owned by the first device owner;
- an identifier of a driving licence owned by the second device owner;
- a mail address of the second device owner;
- a date of an expiry of a driving licence owned by the second device owner.

9. Method according to any of claims 1 to 8, wherein the first device and the second device exchange over a contact-less communication link.

10. A system (10) for communicating data,
**characterized in that** the system comprises a first device (12) and at least one second device (14), the first device comprising means for storing first data and at least one first key, a second device comprising means (140) for storing second data,
- the second device comprises means for sending to the first device the second data;
- the first device comprises concatenation means for concatenating the first data to the second data, the concatenation means generating a concatenated result;
- the first device comprises signature means for signing, by using the first key, the concatenated result, the signature means generating a signed concatenated result;
- the first device comprises means for sending to the second device the signed concatenated result.
